# EUROPÄISCHE PATENTSCHRIFT

(11) **EP 3 021 656 B1**
(45) Veröffentlichungstag und Bekanntmachung des Hinweises auf die Patenterteilung: **11.11.2020**
(21) Anmeldenummer: 14747538.8
(22) Anmeldetag: 15.07.2014
(51) Int. Cl.: A01G 25/09, A01D 34/00

(54) **SYSTEM ZUR ÜBERWACHUNG UND STEUERUNG VON AKTIVITÄTEN ZUMINDEST EINES GARTENGERÄTS INNERHALB ZUMINDEST EINES AKTIVITÄTSGEBIETS**
SYSTEM FOR CONTROLING THE ACTIVITY OF AT LEAST ONE GARDENING DEVICE IN AT LEAST ONE ACTIVITY ZONE
SYSTÈME DE SURVEILLANCE D'ACTIVITÉ D'AU MOINS UN OUTILS DE JARDINAGE DANS AU MOINS UN ESPACE D'ACTIVITÉ

(30) Priorität: 15.07.2013 DE 102013107492
(43) Veröffentlichungstag der Anmeldung: 25.05.2016
(73) Patentinhaber: HUSQVARNA AB, 561 82 Huskvarna (SE)
(72) Erfinder: KÖHLER, Moritz, CH-8001 Zürich (CH); BOLLIGER, Philipp, CH-8400 Winterthur (CH); BACHMANN, Lukas, CH-8050 Zürich (CH)
(74) Vertreter: Finkele, Rolf
(86) Internationale Anmeldenummer: PCT/EP2014/065165
(87) Internationale Veröffentlichungsnummer: WO 2015/007740

(56) Entgegenhaltungen:
- EP-A1- 2 502 481
- EP-A1- 2 502 481
- WO-A1-2011/115563
- WO-A1-2011/115563
- WO-A1-2012/044220
- DE-A1-102011 084 793
- US-A1- 2011 209 765
- US-A1- 2012 290 165
- US-A1- 2012 290 165

## Beschreibung

### Stand der Technik

Die Erfindung betrifft eine Überwachungsvorrichtung zur Überwachung und Steuerung von Aktivitäten zumindest eines Gartengeräts innerhalb zumindest eines Aktivitätsgebiets.

Das in der WO 2011/115563 offenbarte Gartengerät verfügt über eine Prozessoreinheit, die auf dem Gartengerät gespeicherte Koordinaten von Aktivitätsgebieten mit Positionsdaten eines Ortungsmittels des Gartengeräts vergleicht um festzustellen, in welchem Aktivitätsgebiet sich das Gartengerät befindet. Abhängig vom Aktivitätsgebiet führt das Gartengerät unterschiedliche Funktionen aus, wie einen Rasenschnitt mit unterschiedlichen Schnitthöhen.

Das in der US 2003/236723 A1 offenbarte Gartengerät übermittelt Aktivitäten an ein externes Rechnungssystem, das anhand der Aktivitäten des Gartengeräts Rechnungen ausstellt.

Das in der US 20103/24731 A1 offenbarte Gartengerät ermittelt eine Karte eines Aktivitätsgebiets, indem es ferngesteuert durch einen Benutzer mit einem Ortungsmittel seinen Weg verfolgt und, sobald ein geschlossener Weg erkannt wird, diesen als Grenze eines Aktivitätsgebiets annimmt.

Die Gartengeräte steuern ihre Aktivitäten innerhalb eines Aktivitätsgebiets eigenständig, ohne einen Zustand weiterer Aktivitätsgebiete und/oder weiterer Gartengeräte und/oder der Umwelt zu berücksichtigen. Dies kann zu mangelnder Effizienz des Einsatzes des Gartengeräts und/oder unerwünschten Ergebnissen und/oder Konflikten zwischen Gartengeräten und/oder zwischen Gartengeräten und einem Benutzer führen.

Die Aufgabe der Erfindung besteht insbesondere darin, eine Überwachungsvorrichtung zur Uberwachung und Steuerung von Aktivitäten zumindest eines Gartengeräts mit verbesserten Eigenschaften hinsichtlich der Steuerung von Aktivitäten von Gartengeräten bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Überwachungsvorrichtung zur Überwachung und Steuerung von Aktivitäten zumindest eines Gartengeräts innerhalb zumindest eines Aktivitätsgebiets.

Es wird eine Überwachungsvorrichtung vorgeschlagen, die zumindest einen Aktivitätsgebietszustand des Aktivitätsgebiets und zumindest einen Gartengerätezustand des Gartengeräts zur Steuerung des Gartengeräts auszuwerten. Unter einem "Gartengerät" soll in diesem Zusammenhang ein zumindest teilautonomes Gerät verstanden werden, das zu einem Einsatz in einem Garten vorgesehen ist. Der Garten kann dem Anbau und der Kultivierung von Pflanzen und/oder der Freizeitgestaltung und/oder Erholung von Benutzern des Gartens dienen. Unter "Benutzern" sollen in diesem Zusammenhang insbesondere Personen verstanden werden, die sich im Gebiet des Gartens aufhalten. Weiter können auch Tiere, insbesondere Haustiere, die sich im Garten aufhalten, Benutzer des Gartens sein. Der Garten kann ein öffentlicher Garten oder Park sein. Bevorzugt ist der Garten ein privater Garten. Der Garten kann ein Gebäude, wie ein öffentliches Gebäude, ein Hotel und/oder ein Krankenhaus, umgeben. Bevorzugt umgibt der Garten ein Wohngebäude. Der Garten kann auch Teil eines Gebäudes sein, wie insbesondere ein Dachgarten oder eine Terrasse. Der Garten kann Pflanzkisten und/oder Töpfe mit Bepflanzungen aufweisen. Der Garten kann auf einem eigenen, abgegrenzten Stück Land angelegt sein, wie zum Beispiel ein Schrebergarten. Unter einem Garten soll in diesem Zusammenhang auch ein gartenähnliches Gebiet verstanden werden, wie insbesondere ein Golfplatz oder eine gartenähnliche Nutzfläche. Das Gartengerät kann unter anderem als Rasenmäher, insbesondere Mähroboter, Schneidegerät, insbesondere Heckenschnittroboter, Bewässerungsgerät und/oder Düngegerät ausgebildet sein. Des Weiteren kann das Gartengerät unter anderem als Laubsaugroboter, Mulcher, Wasserreinigungsroboter oder Pumpe ausgebildet sein. Unter einem "Aktivitätsgebiet" soll in diesem Zusammenhang insbesondere ein Gebiet verstanden werden, in dem ein Gartengerät eine Aktivität ausführen soll. Aktivitätsgebiete können unter anderem Mähgebiete, Heckenschnittgebiete, Düngegebiete und/oder Bewässerungsgebiete sein. Weiter kann ein Aktivitätsgebiet auch ein Verbotsgebiet sein, welches von Gartengeräten gemieden werden soll und/oder in dem Gartengeräte keine Aktivitäten durchführen sollen, oder ein Überquerungsgebiet, welches von Gartengeräten überquert werden kann, in dem Gartengeräte aber keine weiteren Aktivitäten wie Schneiden, Bewässern, Düngen usw. ausführen sollen. Gartengeräte können sich, während sie eine Aktivität in einem Aktivitätsgebiet ausüben, im Aktivitätsgebiet aufhalten. Zum Beispiel wird ein Mähroboter, der in einem Aktivitätsgebiet einen Rasen mäht, sich im Aktivitätsgebiet aufhalten. Es ist ebenfalls möglich, dass sich Gartengeräte außerhalb des Aktivitätsgebiets aufhalten, indem sie eine Aktivität durchführen und/oder von einem Aktivitätsgebiet aus Aktivitäten in mehreren Aktivitätsgebieten durchführen. Zum Beispiel kann ein Bewässerungsgerät, wie ein Rasensprenger, von einem Standort aus oder einem Bereich aus in einem Aktivitätsgebiet mit Bewässerungsstrahlen mehrere Aktivitätsgebiete bewässern, ohne dass sich das Bewässerungsgerät selbst in diesen Aktivitätsgebieten aufhält. Die Bewässerungsstrahlen können so gesteuert sein, dass der Rasensprenger gewünschte Bewässerungsgebiete bewässert, während er andere Gebiete, wie insbesondere Verbotsgebiete und/oder Überquerungsgebiete, von der Bewässerung ausnimmt. Das Gartengerät kann als ein durch einen Bediener geführtes Gartengerät ausgebildet sein, wie zum Beispiel ein vom Bediener geführter Rasenmäher oder eine vom Bediener geführte Bewässerungseinrichtung, wie insbesondere ein Bewässerungsschlauch. Unter einem "Bediener" soll in diesem Zusammenhang insbesondere ein Benutzer des Gartens verstanden werden, der zumindest Teilfunktionen eines Gartengeräts direkt bedient und/oder steuert. Unter einer "Überwachungsvorrichtung" soll in diesem Zusammenhang eine von einem einzelnen Gartengerät unabhängig ausgebildete Vorrichtung verstanden werden, die Gartengeräte steuert und/oder überwacht. Die Überwachungsvorrichtung kann als verteiltes System ausgebildet sein, welches eine Mehrzahl miteinander kommunizierender Prozessor- und Speichereinheiten aufweist. Insbesondere können eine Mehrzahl von Gartengeräten und/oder Aktivitätsgebieten Prozessor- und/oder Speichereinheiten der Überwachungsvorrichtung aufweisen. Bevorzugt ist die Überwachungsvorrichtung als ein Server ausgebildet. Unter einem "Server" soll in diesem Zusammenhang insbesondere ein Computersystem mit einer Serversoftware verstanden werden, das zu einer Speicherung und Verarbeitung von Daten von Klienten vorgesehen ist. Insbesondere können Gartengeräte, Aktivitätsgebiete und Benutzer Klienten des Servers sein. Der Server kann Teil eines Gartengeräts sein. Bevorzugt ist der Server als stationär angeordnetes Computersystem ausgebildet. Besonders bevorzugt ist der Server als "cloudbasierter" Server Teil eines mit dem Internet verbundenen Rechenzentrums. Die Überwachungsvorrichtung kann vorteilhaft den Zustand von Aktivitätsgebieten, wie eine Rasenhöhe, eine Bodenfeuchtigkeit und/oder einen Nährstoffgehalt, eine Anwesenheit von Personen und/oder weiterer Gartengeräte und den Zustand des Gartengeräts auswerten und/oder speichern und das zumindest eine Gartengerät geeignet steuern. Die Überwachungsvorrichtung kann durch Bediener geführte Gartengeräte steuern. Das durch den Bediener geführte Gartengerät kann eine Ausgabeeinheit aufweisen, um dem Bediener Anweisungen zum Führen des Gartengeräts zu geben, wie zum Beispiel Hinweise zu einer Geschwindigkeit und/oder einer Richtung, in der das Gartengerät geführt werden soll. Die Überwachungsvorrichtung kann die Ausgabe der Hinweise an den Benutzer durch das Gartengerät steuern. Die Überwachungsvorrichtung kann den Gartengerätezustand des durch den Bediener geführten Gartengeräts geeignet steuern, wie zum Beispiel eine Schnitthöhe oder eine Bewässerungsmenge einstellen. Insbesondere kann die Überwachungsvorrichtung über eine Vielzahl von Informationen verfügen. Konflikte, die bei einer selbstständigen Steuerung eines Gartengeräts mit weiteren Gartengeräten und/oder weiteren Benutzern entstehen können, können vermieden werden.

Die Überwachungsvorrichtung ist zu einer gleichzeitigen Überwachung und Steuerung von Aktivitäten von Gartengeräten unterschiedlichen Typs vorgesehen. Insbesondere kann die Überwachungsvorrichtung dazu vorgesehen sein, eine Reihenfolge von Aktivitäten unterschiedlicher Gartengeräte, wie Mähroboter, Bewässerungsgeräte und Düngegeräte, so zu steuern, dass die Aktivitäten vorteilhaft und/oder besonders wirksam sind. Insbesondere kann die Überwachungsvorrichtung dazu vorgesehen sein, Konflikte der Aktivitäten der Gartengeräte zu vermeiden und die Gartengeräte ihre Aktivitäten in einer vorteilhaften Reihenfolge durchführen zu lassen. Bevorzugt kann ein Mähroboter zunächst eine Wiese mähen, bevor ein Bewässerungsgerät die Wiese bewässert. Ein unvorteilhafter Schnitt einer nassen Wiese kann vermieden werden. Bevorzugt ist die Überwachungsvorrichtung dazu vorgesehen, Aktivitäten von Gartengeräten und/oder Benutzern zu priorisieren. Insbesondere können Aktivitäten von Benutzern Vorrang vor Aktivitäten von Gartengeräten haben. Gartengeräte können Benutzern ausweichen und/oder Aktivitäten, die Benutzer beeinträchtigen, einstellen. Schnittmaschinen, wie Mähroboter oder Heckenschnittmaschinen, können Vorrang vor Bewässerungsgeräten haben. Es kann sichergestellt werden, dass ein Schnitt immer vor einer Bewässerung durchgeführt wird.

Die Überwachungsvorrichtung zur Steuerung der Aktivitäten des Gartengeräts wertet innerhalb eines Aktivitätsgebiets einen Gartengerätzustand zumindest eines weiteren Gartengeräts und/oder einen Aktivitätsgebietszustand zumindest eines weiteren Aktivitätsgebiets aus. Es kann bei einer Aktivität eines Gartengeräts in einem Aktivitätsgebiet vorteilhaft der Zustand eines weiteren Aktivitätsgebiets und/oder der Zustand und/oder eine Aktivität eines weiteren Gartengeräts berücksichtigt werden. Zum Beispiel kann die Überwachungsvorrichtung Aktivitäten, die Lärmemissionen verursachen wie zum Beispiel Rasenmähen, in einem Aktivitätsgebiet zurückstellen, wenn ein benachbartes Aktivitätsgebiet vom Benutzer zur Erholung genutzt wird.

Weiter ist es vorteilhaft, wenn die Überwachungsvorrichtung zu einer Überwachung und Steuerung von Gartengeräten in einander überlappenden Aktivitätsgebieten vorgesehen ist. Die Aktivitätsgebiete können einander vollständig oder teilweise überlappen. Zum Beispiel kann ein Düngegebiet gleichzeitig ganz oder teilweise ein Bewässerungsgebiet und ein Mähgebiet sein. Weiter können Gartengeräte Aktivitätsgebieten zugeordnet sein. Mehreren Mähgebieten kann jeweils ein Mähroboter zugewiesen sein. Die Mähgebiete können einander jeweils überlappen. In Überlappungszonen können in diesem Beispiel die Mähroboter aller Mähgebiete, die einander in diesem Bereich überlappen, den Rasen mähen. Bevorzugt kann die Überwachungsvorrichtung die Gartengeräte so steuern, dass Konflikte, insbesondere Kollisionen, vermieden werden. Insbesondere kann die Überwachungsvorrichtung ein Gartengerät anweisen, eine Aktivität in einem Überlappungsgebiet und/oder Aktivitätsgebiet zu unterlassen, wenn ein weiteres Gartengerät diese bereits ausgeführt hat. Zum Beispiel kann ein Mähroboter ein Überlappungsgebiet bereits gemäht haben, so dass der weitere Mähroboter das Überlappungsgebiet nicht nochmals mähen muss. Eine besonders effiziente und/oder konfliktfreie Steuerung der Gartengeräte kann möglich sein.

Weiter wird vorgeschlagen, dass die Überwachungsvorrichtung eine Aktivitätsgebietskarteninformation der Aktivitätsgebiete durch eine Verknüpfung einer Gebietskarteninformation mit Benutzerinformationen und/oder Aktivitätsgebietszuständen und/oder Gartengerätzuständen erstellt. Unter einer "Gebietskarte" soll in diesem Zusammenhang insbesondere eine Karte eines Gebiets verstanden werden, das die Aktivitätsgebiete beinhaltet. Die Gebietskarte kann die Grenzen sowie eine Topographie eines Gebiets umfassen. Die Gebietskarte kann insbesondere mit Hilfe von Kartenmaterial eines Kartenservers, wie eines internetbasierten Kartendiensts, generiert werden. Zusätzlich und/oder alternativ können 3D-Kameras, Laservermessungsgeräte oder weitere, dem Fachmann als geeignet erscheinende Geräte zur Gebietskartengenerierung genutzt werden. Bevorzugt kann die Überwachungsvorrichtung Gebietskarteninformationen mit Hilfe einer Auswertung von Orientierungen und Positionen der Gartengeräte ermitteln. Die Gartengeräte können sich in einem Gebiet bewegen und Gebietsgrenzen erkennen und/oder lernen. Bevorzugt können die Gartengeräte die erkannten und/oder gelernten Gebietsgrenzen an die Überwachungsvorrichtung übermitteln. Eine Aktivitätsgebietskarte kann mit Hilfe der Gebietskarte erstellt werden. Es können weitere Informationen zur Erstellung der Aktivitätsgebietskarte genutzt werden wie lokale Vermessungsdaten, Informationen der Gartengeräte und insbesondere mit Hilfe von Luftaufnahmen, insbesondere mit unbemannten Foto- und/oder Vermessungsdrohnen gewonnene Daten. Benutzerinformationen können insbesondere weitere Beschreibungen der Aktivitätsgebiete, Kalenderinformationen und/oder Benutzeraktivitäten eines oder mehrerer Benutzer beinhalten. Weiter können Benutzerinformationen Beobachtungen zumindest eines Benutzers in Aktivitätsgebieten enthalten, insbesondere Missstände, wie einen unzureichend geschnittenen Rasen, zu wenig oder zu stark bewässerte Gebiete, Pflanzen mit Mangelerscheinungen und Schädlingsbefall. Weiter können Benutzerinformationen direkte Steuerbefehle für Gartengeräte enthalten, wie einen direkten Befehl des Benutzers an ein Gartengerät, eine Aktivität zu beginnen und/oder zu stoppen, und/oder Fernsteuerbefehle an die Gartengeräte. Aktivitätsgebietszustände beschreiben den Zustand eines Aktivitätsgebiets sowohl historisch, also zeitlich zurückliegende Zustände des Aktivitätsgebiets, und aktuell. Aktivitätsgebietszustände können Vegetationsart und -längen und deren räumliche Anordnung, Düngerkonzentrationen und Düngerbedarf, Art des Bodens und der Bodendichte, durch im Aktivitätsgebiet durch Sensoren ermittelte Umweltzustände, wie Bodenfeuchtigkeit, Licht- und Temperaturverhältnisse, oder pH-Wert und insbesondere die zuletzt in dem Aktivitätsgebiet ausgeführten Aktionen umfassen, wie zum Beispiel wann im Aktivitätsgebiet zuletzt bewässert und/oder zuletzt gedüngt wurde. Gartengerätezustände können aktuelle und historische Aktivitäten, Orts- und Bewegungsinformationen wie aktuelle und historische Positionen und aktuelle und historische Bewegungsvektoren, Ladezustände von Akkueinheiten der Gartengeräte sowie einen Wartungszustand und eine Wartungshistorie beinhalten. Weiter können Gartengerätezustände Einstellungen der Gartengeräte wie Drehzahlen, Schnitthöhen, Durchflussmengen und/oder Beleuchtungsstärken beinhalten. Abhängig von der Art des Aktivitätsgebiets und/oder des Gartengeräts können Aktivitätsgebietszustände und/oder Gartengerätezustände weitere, dem Fachmann als sinnvoll erscheinende Informationen umfassen. Die Aktivitätsgebietszustände und/oder Gartengerätezustände können eine vorteilhafte Grundlage für die Steuerung und Überwachung der Gartengeräte bilden. Beobachtungen des Benutzers in den Aktivitätsgebieten können vorteilhaft für die Steuerung und Überwachung der Gartengeräte genutzt werden. Der Benutzer kann auf Wunsch direkt die Aktivitäten der Gartengeräte beeinflussen. Der Wartungszustand kann vorteilhaft genutzt werden, um eine Wartung des Gartengeräts anzufordern. Der Gartengerätezustand kann vorteilhaft für ein Management der Gartengeräte genutzt werden. Gartengeräte können abhängig vom Wartungszustand gewartet und/oder ersetzt werden. Gartengerätezustände können ausgewertet und Qualitätsdaten erhoben werden.

Die Gartengeräte können besonders effizient eingesetzt werden. Ein Anbieter von Gartengeräten kann den Einsatz der Gartengeräte in einer Mehrzahl von Gärten effizient planen. Ein effizientes Management eines Gartengeräteparks des Anbieters kann vereinfacht werden.

Besonders bevorzugt steuert die Überwachungsvorrichtung die Aktivitäten des zumindest einen Gartengeräts indem zumindest eine Benutzerinformation mit zumindest einem Aktivitätsgebietszustand und/oder zumindest einem Umweltzustand verknüpft wird. Ein Umweltzustand kann eine Bodenfeuchtigkeit, Licht- und Temperaturverhältnisse, pH-Werte, Sonnenscheindauer, eine Regenmenge, eine Windstärke und/oder eine Aktivität von Personen in der Umgebung des Gartens beinhalten. Insbesondere kann der Umweltzustand einen historischen, einen aktuellen und einen zukünftigen Wetterzustand, also eine Prognose des Wetterzustands, beinhalten. Weiter kann ein Umweltzustand eine Ruhezeit, insbesondere für Personen in der Umgebung des Gartens, beinhalten. In dieser Zeit können Aktivitäten, die Emissionen verursachen, vermieden werden. Bevorzugt können im Garten und/oder in Aktivitätsgebieten Funksensoren angeordnet sein, die einen oder mehrere Umweltzustände messen und an die Überwachungsvorrichtung übermitteln. Die Überwachungsvorrichtung kann die Gartengeräte vorteilhaft vorrausschauend unter Berücksichtigung einer voraussichtlichen Wetterentwicklung steuern. Es kann vermieden werden, dass im Hinblick auf die Wetterentwicklung überflüssige und/oder nachteilige Aktivitäten ausgeführt werden. Eine Bewässerung kann zum Beispiel unterbleiben, wenn Regen innerhalb einer bestimmten Zeitspanne zumindest wahrscheinlich ist. Wasser kann gespart werden und/oder eine Überbewässerung vermieden werden. Weiter kann eine Benutzerinformation wie eine Kalenderinformation, ein Kalenderintervall und/oder ein Kalendereintrag verknüpft werden. Ein Kalendereintrag kann beinhalten, dass der Benutzer sich zu einem Termin im Garten aufhalten wird. Die Überwachungsvorrichtung kann vermeiden, dass zu diesem Termin störende Aktivitäten von Gartengeräten stattfinden. Bevorzugt kann die Überwachungsvorrichtung Kalendereinträge erstellen und/oder verändern. Die Überwachungsvorrichtung kann eine geplante Aktivität als Kalendereintrag erstellen. Benutzer können sich mit Hilfe solcher Kalendereinträge über geplante Aktivitäten informieren.

Weiter wird vorgeschlagen, dass die Überwachungsvorrichtung über ein drahtloses Kommunikationsmittel zur Kommunikation mit dem zumindest einen Gartengerät verfügt. Insbesondere kann das drahtlose Kommunikationsmittel eine Funkverbindung, insbesondere eine WLAN-, Mobilfunk/GPRS-, DECT-, Bluetooth und/oder ISM/SRD-Typ A/B-basierte Funkverbindung, aufweisen. Die Überwachungsvorrichtung kann besonders einfach mit den Gartengeräten kommunizieren. Eine drahtgebundene Infrastruktur kann entfallen. Bevorzugt verfügt die Überwachungsvorrichtung über weitere drahtlose und/oder drahtgebundene Kommunikationsmittel zur Kommunikation mit den Aktivitätsgebieten und/oder dem Benutzer und/oder weiteren Informationssystemen.

Bevorzugt verfügt die Überwachungsvorrichtung über eine internetbasierte Schnittstelle zur Kommunikation mit dem zumindest einen Gartengerät und/oder zumindest einem Benutzer und/oder zumindest einem externen Informationssystem. Bevorzugt weisen die Gartengeräte internetbasierte Schnittstellen auf. Alternativ können die Gartengeräte über eine lokale Datenverbindung mit einem Kommunikationsgerät verbunden sein, das über eine internetbasierte Schnittstelle mit der Überwachungsvorrichtung kommuniziert. Unter einer "internetbasierten Schnittstelle" soll in diesem Zusammenhang insbesondere eine bevorzugt TCP/IP-basierte Datenverbindung mit dem Internet verstanden werden. Die Überwachungsvorrichtung kann vorteilhaft über das Internet kommunizieren und/oder über das Internet erreicht werden und/oder Informationen aus dem Internet erhalten und/oder Informationen im Internet zur Verfügung stellen. Die Überwachungsvorrichtung kann eine besonders große Anzahl an Informationsdiensten nutzen wie insbesondere Kartenserver, Wetterdienste, Kalenderdienste, E-Maildienste, Speicherdienste, und/oder soziale Netzwerke. Die Überwachungsvorrichtung kann diese Informationen vorteilhaft zu einer Steuerung und/oder Überwachung der Aktivitäten der Gartengeräte und/oder zur Planung der Aktivitäten nutzen. Die Überwachungsvorrichtung kann einem Benutzer Informationen besonders einfach weltweit zur Verfügung stellen und/oder vom Benutzer Informationen erhalten, zum Beispiel auf einem Computer und insbesondere einem Tablet, einer Smartwatch, einem Smart-Glass und/oder Smartphone. Der Benutzer kann ebenfalls einen Chip und/oder Tag mitführen, der Informationen an die Überwachungsvorrichtung übermittelt. Insbesondere kann der Chip und/oder Tag dazu dienen, den Aufenthaltsort des Benutzers zu ermitteln und/oder zu übermitteln.

Vorteilhaft verfügt die Überwachungsvorrichtung über zumindest ein Ortungsmittel zur Erfassung einer Position und/oder Orientierung des zumindest einen Gartengeräts innerhalb zumindest eines Aktivitätsgebiets. Die Ortungsmittel können Teil der Gartengeräte sein und die Positions- und/oder Orientierungsinformationen an die Überwachungsvorrichtung übermitteln. Die Überwachungsvorrichtung kann die Aktivitäten der Gartengeräte vorteilhaft abhängig von ihrer Position und/oder Orientierung steuern und überwachen. Zum Beispiel kann die Überwachungseinheit ein Bewässerungsmuster eines Bewässerungsgeräts so einstellen, dass ein vorgesehener Bereich eines Aktivitätsgebiets abhängig von der aktuellen Position und/oder Orientierung des Bewässerungsgeräts im Aktivitätsgebiet bewässert wird. Bevorzugt können die Ortungsmittel unabhängig von Markierungen und/oder speziellen, in den Aktivitätsgebieten angebrachten Orientierungshilfen arbeiten. Insbesondere können die Ortungshilfen einen Ort und/oder eine Position mit Hilfe von funkbasierter Navigation bestimmen, insbesondere durch die Auswertung von GPS-, WLAN-, Mobilfunk-, und weiteren Funksignalen. Die Gartengeräte können besonders flexibel eingesetzt werden.

Weiter wird vorgeschlagen, dass die Überwachungsvorrichtung bei einer Ortung zumindest eines Gartengeräts außerhalb eines zulässigen Gebiets und/oder innerhalb eines Diebstahlgebiets das Gartengerät deaktiviert und/oder eine Meldung ausgibt. Unter einem "zulässigen Gebiet" soll in diesem Zusammenhang insbesondere ein Gebiet innerhalb des Gartens verstanden werden, in dem sich das Gartengerät aufhalten darf. Unter einem "Diebstahlgebiet" soll in diesem Zusammenhang insbesondere ein Gebiet verstanden werden, in das das Gartengerät insbesondere durch einen Diebstahl gebracht werden kann. Das Diebstahlgebiet kann insbesondere das Gebiet außerhalb des Gartens sein. Das zulässige Gebiet kann insbesondere die Aktivitätsgebiete umfassen, in denen das Gartengerät Aktivitäten durchführen soll. Das Diebstahlgebiet und/oder das zulässige Gebiet kann auch auf andere, sinnvoll erscheinende Art und Weise definiert sein. Unter "deaktivieren" soll in diesem Zusammenhang insbesondere verstanden werden, dass das Gartengerät die zu seiner Anwendung wesentlichen Aktivitäten, zu denen es vorgesehen ist, einstellt. Insbesondere kann das Gartengerät Bewässerungs-, Dünge- und/oder Schnittaktivitäten einstellen. Unter einer "Meldung" soll insbesondere eine Information an den Benutzer, insbesondere über ein internetbasiertes Kommunikationsgerät, wie bevorzugt ein Smartphone, verstanden werden. Das Gartengerät kann für einen Dieb unbenutzbar sein.

Besonders vorteilhaft kann die Überwachungsvorrichtung eine Position des Gartengeräts außerhalb des zulässigen Gebiets und/oder innerhalb des Diebstahlgebiets verfolgen. Insbesondere kann das Gartengerät im deaktivierten Zustand weiter Orts- und Bewegungsinformationen an die Überwachungsvorrichtung senden. Die Überwachungsvorrichtung kann den aktuellen Ort des Gartengeräts an den Benutzer melden. Der Benutzer kann das gestohlene und/oder aus dem zulässigen Gebiet entfernte Gartengerät lokalisieren.

Weiter wird ein System mit einer Überwachungsvorrichtung mit zumindest einem Gartengerät vorgeschlagen. Die Überwachungsvorrichtung kann mit dem Gartengerät besonders gut abgestimmt werden.

Weiter wird eine Überwachungsvorrichtung eines Systems zur Überwachung und Steuerung von Aktivitäten zumindest eines Gartengeräts innerhalb zumindest eines Aktivitätsgebiets vorgeschlagen. Die Überwachungsvorrichtung kann das zumindest eine Gartengerät vorteilhaft steuern und überwachen.

Weiter wird ein Verfahren zum Steuern von Gartengeräten mit einer Überwachungsvorrichtung vorgeschlagen. Das Verfahren kann dazu geeignet sein, die Gartengeräte besonders effizient und konfliktarm zu steuern.

Weiter wird ein Verfahren mit einer Überwachungsvorrichtung zum Erstellen einer Aktivitätsgebietskarteninformation vorgeschlagen. Die Überwachungsvorrichtung kann die Aktivitätsgebietskarteninformationen und/oder Aktivitätsgebietskarten vorteilhaft aus Kartenmaterial, welches mit weiteren Informationen verknüpft wird, erstellen.

Das erfindungsgemäße System soll hierbei nicht auf die oben beschriebene Anwendung und Ausführungsform beschränkt sein. Insbesondere kann das erfindungsgemäße System zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Systems zur Überwachung und Steuerung von Aktivitäten von Gartengeräten innerhalb von Aktivitätsgebieten mittels einer Überwachungsvorrichtung,
- Fig. 2: eine schematische Darstellung des Systems in einem Nutzungsfall, in dem ein Gartengerät die Aktivitätsgebiete verlässt,
- Fig. 3: eine schematische Darstellung des Systems in einem Nutzungsfall, in dem sich ein Benutzer in einem Aktivitätsgebiet bewegt,
- Fig. 4: eine schematische Darstellung des Systems in einem Nutzungsfall mit überlappenden Aktivitätsgebieten,
- Fig. 5: eine schematische Darstellung des Systems in einem Nutzungsfall mit Gartengeräten unterschiedlichen Typs,
- Fig. 6: eine schematische Darstellung des Systems in einem Nutzungsfall mit in den Aktivitätsgebieten angeordneten Funksensoren,
- Fig. 7: eine schematische Darstellung eines Informationsflusses zwischen der Überwachungsvorrichtung und dem Gartengerät,
- Fig. 8: eine schematische Darstellung eines Verfahrens zur Ermittlung von Aktivitätsgebietskarteninformationen,
- Fig. 9: eine schematische Darstellung eines Verfahrens zur Festlegung von Aktivitäten und
- Fig. 10: eine schematische Darstellung des Systems in einem Nutzungsfall mit einem von einem Bediener geführten Gartengerät.

### Beschreibung des Ausführungsbeispiels

Im folgenden Ausführungsbeispiel sind die Erfindung und Varianten ihrer Anwendung beschrieben. Zur Unterscheidung von Varianten einzelner Elemente sind deren Bezugszeichen Buchstaben nachgestellt.

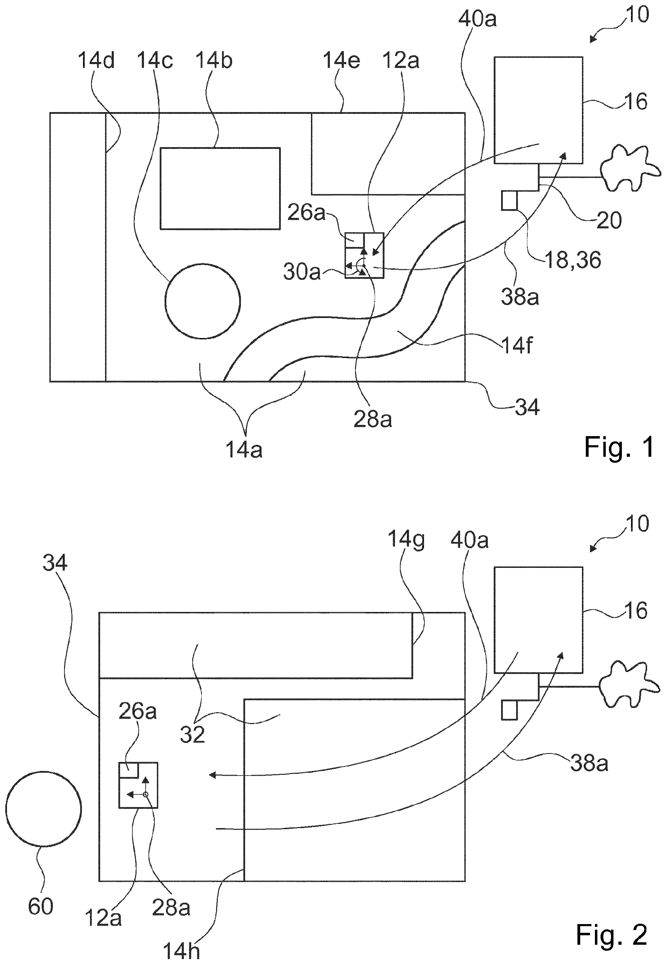

Figur 1 zeigt eine schematische Darstellung eines Systems 10 zur Überwachung und Steuerung von Aktivitäten von Gartengeräten 12 innerhalb von Aktivitätsgebieten 14a, 14b, 14c, 14d, 14e, 14f eines Gartens 34 mit einer Überwachungsvorrichtung 16. Die Überwachungsvorrichtung 16 ist dazu vorgesehen, Aktivitätsgebietszustände der Aktivitätsgebiete 14a, 14b, 14c, 14d, 14e, 14f zur Steuerung von Gartengeräten 12, in diesem Anwendungsfall des Gartengeräts 12a, auszuwerten. Weiter weist die Überwachungsvorrichtung 16 eine Schnittstelle zu einem hier nicht näher dargestellten Gebäudeautomatisierungssystem auf. Das Gebäudeautomatisierungssystem kann eine Steuerung und Regelung einer Gebäudetechnik eines Gebäudes im Bereich des Gartens 34 mit den Aktivitäten der Gartengeräte 12 abstimmen. Das Aktivitätsgebiet 14a ist als Mähgebiet 1 ausgebildet, welches von dem als Überquerungsgebiet ausgebildeten Aktivitätsgebiet 14f unterbrochen ist. Das Aktivitätsgebiet 14b ist als Düngegebiet ausgebildet. Das Aktivitätsgebiet 14c ist als Mähgebiet 2 ausgebildet, welches gegenüber dem Mähgebiet 1 eine abweichende Schnitthöhe aufweist. Das Aktivitätsgebiet 14d ist als Heckenschnittgebiet ausgebildet. Das Aktivitätsgebiet 14e ist als Verbotsgebiet ausgebildet, in dem sich kein Gartengerät 12 aufhalten darf und in dem kein Gartengerät 12 Aktivitäten durchführen darf. Ein Verbotsgebiet kann zum Beispiel eine Terrasse sein, die von Benutzern genutzt wird und die keine durch Aktivitäten von Gartengeräten 12 zu pflegenden Objekte enthält. Das Gartengerät 12a ist als Mähroboter ausgebildet, der als Hauptaktivität den Rasen der Aktivitätsgebiete 14a und 14c schneidet und zu diesem Zweck das Aktivitätsgebiet 14f überquert. Eine weitere Aktivität des Gartengeräts 12a kann zum Beispiel das Aufsuchen einer hier nicht dargestellten Ladestation zum Aufladen einer Akkueinheit des Gartengeräts 12a sein. Weitere, hier nicht näher dargestellte Gartengeräte 12 können zum Beispiel ein Düngeautomat zum Düngen des Aktivitätsgebiets 14b, ein Heckenschneideroboter zum Heckenschnitt des Aktivitätsgebiets 14d oder ein Bewässerungsgerät zum Bewässern eines oder mehrerer der Aktivitätsgebiete 14 sein.

Die Überwachungsvorrichtung 16 ist als Server ausgebildet, der zur Speicherung und Verarbeitung von Daten vorgesehen ist und über eine internetbasierte Schnittstelle 20 zur Kommunikation mit Gartengeräten 12, Benutzern 22 und externen Informationssystemen 24 verfügt. Der Server kann sich an einem vom Garten 34 unabhängigen Standort befinden und kommuniziert über die internetbasierte Schnittstelle 20. Ein als WLAN- und/oder Mobilfunk-Router 36 ausgebildetes drahtloses Kommunikationsmittel 18 der

Überwachungsvorrichtung 16 ist innerhalb oder in der Nähe des Gartens 34 angeordnet, so dass eine Reichweite des WLAN- und/oder Mobilfunk-Routers 36 ausreichend ist, um mit den Gartengeräten 12 zu kommunizieren und um Informationen der Aktivitätsgebiete 14 zu erhalten, insbesondere von hier nicht näher dargestellten Sensoren und Überwachungseinrichtungen der Aktivitätsgebiete 14. Im beschriebenen Fall des als Mähroboter ausgebildeten Gartengeräts 12a übermittelt das Gartengerät 12a an die Überwachungsvorrichtung 16 seine Zustandsinformationen 38a, in diesem Fall insbesondere seine Orts- und Bewegungsinformationen, die eine Position 28a und eine Orientierung 30a des Gartengeräts 12a umfassen, und die Überwachungsvorrichtung 16 sendet an das Gartengerät 12a ein Steuersignal 40a. Das Steuersignal 40a kann zum Beispiel eine Anweisung an das Gartengerät 12a beinhalten, eine Aktivität zu beginnen, zum Beispiel das Aktivitätsgebiet 14a zu mähen. Das Gartengerät 12a kann diese Aktivität autonom ausführen, wobei die Überwachungsvorrichtung 16 Zustandsinformationen, die den Gartengerätezustand inklusive aktueller Orts- und Bewegungsinformationen des Gartengeräts 12a umfassen, fortlaufend überwacht oder bei Bedarf abruft. Ebenfalls ist es möglich, dass die Überwachungsvorrichtung 16 das Gartengerät 12a direkt steuert, um Konflikte und/oder Kollisionen mit weiteren Gartengeräten 12 oder Benutzern 22 zu vermeiden. Die Überwachungsvorrichtung steuert dabei die Aktivitäten der Gartengeräte 12 entsprechend festgelegten Prioritäten. Schnittmaschinen, wie zum Beispiel das als Mähroboter 12a ausgebildete Gartengerät, sind gegenüber Bewässerungsgeräten priorisiert. So ist sichergestellt, dass ein Schnitt vor einer Bewässerung erfolgt. Ein als GPS-Empfänger ausgebildetes Ortungsmittel 26a des Gartengeräts 12a generiert die Orts- und Bewegungsinformation als Teil der Zustandsinformationen 38a und ist Teil der Überwachungsvorrichtung 16. Das Gartengerät 12a verfügt zudem über weitere, nicht dargestellte Ortungsmittel wie Abstandssensoren, um eine Navigation in den Aktivitätsgebieten 14 zu unterstützen.

Figur 2 zeigt ein weiteres Anwendungsbeispiel des Systems 10 zur Überwachung und Steuerung von Aktivitäten von Gartengeräten 12. Im Garten 34 sind in diesem Fall zwei Aktivitätsgebiete 14g, 14h angeordnet. Die Aktivitätsgebiete 14g, 14h bilden ein zulässiges Gebiet 32, in dem das Gartengerät 12a betrieben wird. Das Gartengerät 12a sendet mit dem Ortungsmittel 26a ermittelte Orts- und Bewegungsinformationen als Teil der Zustandsinformationen 38a an die Überwachungsvorrichtung 16. Wird das Gartengerät 12a aus dem Gebiet 32 entfernt, gibt die Überwachungsvorrichtung 16 über das Internet eine Meldung aus, die vom Benutzer 22 zum Beispiel mittels eines Smartphones oder Tablet-Computers empfangen wird. Alternativ kann der Benutzer 22 die Meldung mit einer Smartwatch oder einem Smart-Glass oder einem ähnlichen geeigneten Gerät empfangen. Zusätzlich gibt die Überwachungsvorrichtung 16 an das Gartengerät 12a ein Steuersignal 40a aus, das das Gartengerät 12a deaktiviert. Das Gartengerät 12a kann somit außerhalb des zulässigen Gebiets 32 keine Aktivitäten durchführen, so dass ein Diebstahl uninteressant ist. Der Benutzer 22 kann nach einer Benutzeridentifikation über die Überwachungsvorrichtung 16 das zulässige Gebiet 32, in dem das Gartengerät 12a Aktivitäten ausführt, verändern. In einem alternativen Betriebsmodus des Systems 10 wird ein Diebstahlgebiet 60 definiert. Das Diebstahlgebiet 60 kann zum Beispiel das Gebiet außerhalb des Garten 34 oder außerhalb des zulässigen Gebiets 32 sein oder vom Benutzer auf eine andere, ihm sinnvoll erscheinende Weise definiert sein. Die Überwachungsvorrichtung 16 deaktiviert das Gartengerät 12a, wenn es sich im Diebstahlgebiet 60 aufhält. Das Gartengerät 12a sendet im deaktivierten Modus außerhalb des zulässigen Gebiets 32 oder im Diebstahlgebiet 60 weiter seine Zustandsinformationen 38a mit Orts- und Bewegungsinformationen an die Überwachungsvorrichtung 16a. Die Überwachungsvorrichtung 16a verfolgt die aktuelle Position 28a des Gartengeräts 12a im deaktivierten Modus, so dass der Benutzer das Gartengerät 12a im Diebstahlgebiet 60 und/oder außerhalb des zulässigen Gebiets 32 lokalisieren kann.

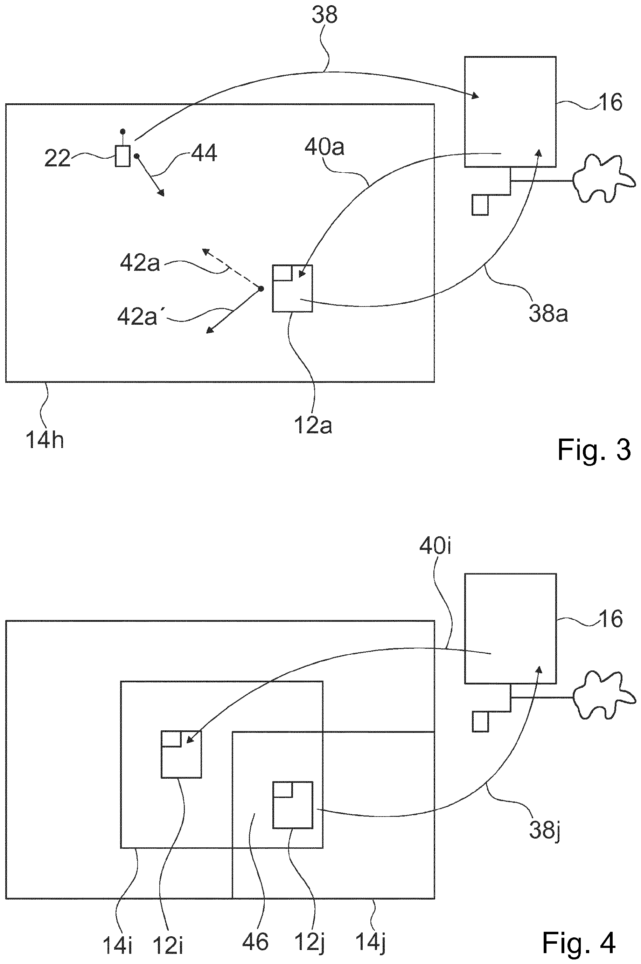

Figur 3 zeigt ein weiteres Anwendungsbeispiel des Systems 10 zur Überwachung und Steuerung von Aktivitäten von Gartengeräten 12. Das Gartengerät 12a führt eine Aktivität in einem Aktivitätsgebiet 14h durch und bewegt sich in einer Bewegungsrichtung 42a. Das Gartengerät 12a überträgt seine Zustandsinformationen 38a an die Überwachungsvorrichtung 16. Im Aktivitätsgebiet 14h hält sich weiter der Benutzer 22 auf. Der Benutzer 22 ermittelt und überträgt mit Hilfe eines Mobiltelefons oder einer Armbanduhr, die über eine Datenverbindung verfügt, seine Orts- und Bewegungsinformationen umfassenden Zustandsinformationen 38 an die Überwachungsvorrichtung 16. Die Überwachungsvorrichtung 16 erkennt, dass die Bewegungsrichtung 42a des Gartengeräts 12a und eine Bewegungsrichtung 44 des Benutzers 22 zu einer Kollision mit dem oder zu gefährlicher Annäherung des Gartengeräts 12a an den Benutzer 22 führen würden. Die Überwachungsvorrichtung 16 sendet ein Steuersignal 40a an das Gartengerät 12a, um die Bewegungsrichtung 42a des Gartengeräts 12a in eine neue Bewegungsrichtung 42a' zu ändern und eine Kollision zu vermeiden. Alternativ kann ein Haustier ebenfalls ein Benutzer sein, das über ein GPS-Halsband oder eine ähnliche Einrichtung verfügt. Die Überwachungsvorrichtung 16 kann den Aufenthaltsort des Haustiers erkennen und das Gartengerät 12a so steuern, dass es nicht zu einer Kollision oder zu einer gefährlichen Annäherung mit dem Haustier kommt. Ebenfalls können sich mehrere Benutzer im Aktivitätsgebiet 12g aufhalten die durch die Überwachungsvorrichtung 16 erfasst werden, beispielsweise mehrere Haustiere und Personen.

Figur 4 zeigt ein weiteres Anwendungsbeispiel des Systems 10 zur Überwachung und Steuerung von Aktivitäten von Gartengeräten 12. Im Garten 34 sind in diesem Fall zwei einander in einem Überlappungsbereich 46 überlappende Aktivitätsgebiete 14i, 14j angeordnet. Ein Gartengerät 12i ist dazu vorgesehen, das Aktivitätsgebiet 14i zu mähen, und ein Gartengerät 12j ist dazu vorgesehen, das Aktivitätsgebiet 14j zu mähen. Das Gartengerät 12j sendet seine Zustandsinformationen 38j an die Überwachungsvorrichtung 16. Die Überwachungsvorrichtung 16 erkennt, dass das Gartengerät 12j den Überlappungsbereich 46 der beiden Aktivitätsgebiete 14i, 14j bereits gemäht hat. Die Überwachungsvorrichtung 16 sendet an das Gartengerät 12i ein Steuersignal 40i, dass das Gartengerät 12i beim Mähen den Überlappungsbereich 46 auslassen soll. Ein doppeltes Mähen des Überlappungsbereichs 46 oder eine Kollision der beiden Gartengeräte 12i, 12j im Überlappungsbereich 46 wird vermieden.

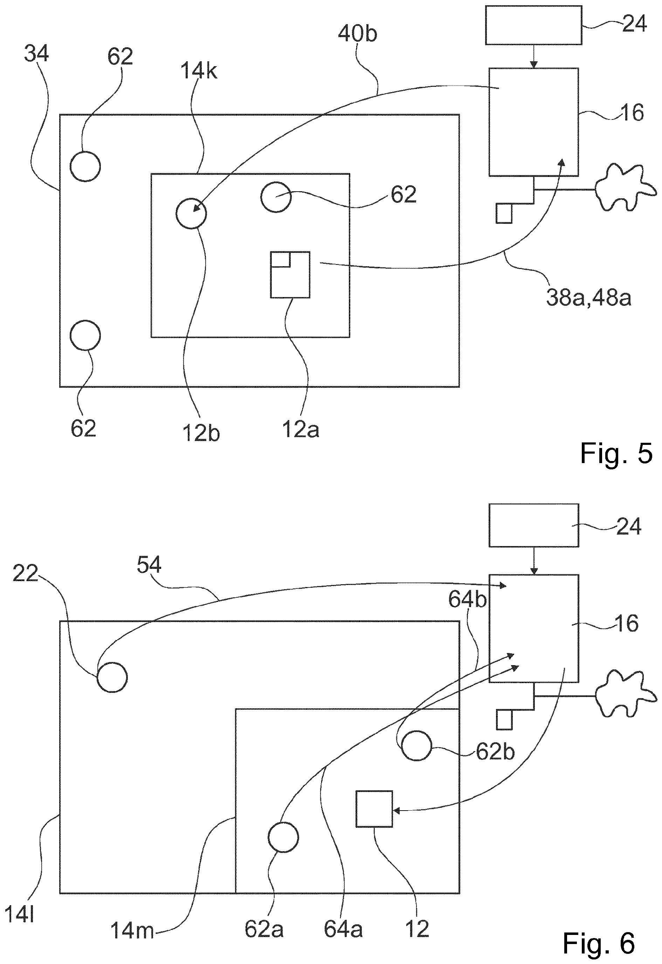

Figur 5 zeigt ein weiteres Anwendungsbeispiel des Systems 10 zur Überwachung und Steuerung von Aktivitäten von Gartengeräten 12. Im Garten 34 ist in diesem Fall ein Aktivitätsgebiet 14k angeordnet. Im Aktivitätsgebiet 14k befinden sich das als Mähroboter ausgebildete Gartengerät 12a und ein als Rasensprenger ausgebildetes Gartengerät 12b. Das Gartengerät 12a sendet an die Überwachungsvorrichtung 16 seine Zustandsinformationen 38a sowie eine Feuchtigkeitsinformation 48a des Bodens an einem Ort, an dem sich das Gartengerät 12a aufhält. Aus einem externen Informationssystem 24 erhält die Überwachungsvorrichtung 16 den aktuellen Wetterbericht mit Informationen über die zu erwartenden Temperaturen, Sonnenscheindauer und Niederschläge. Die Überwachungsvorrichtung 16 verknüpft diese Daten und sendet dem Gartengerät 12b bei Bedarf ein Steuersignal 40b, um das Aktivitätsgebiet 14k zu bewässern. Da ein Mähen von feuchtem Gras nachteilig ist, sendet die Überwachungsvorrichtung 16 dem Gartengerät 12b das Steuersignal 40b zur Bewässerung erst, nachdem das Gartengerät 12a das Mähen des Aktivitätsgebiets 14k abgeschlossen hat. Weiter kann die Überwachungsvorrichtung 16 eine Kalenderinformation berücksichtigen, zum Beispiel wenn der Benutzer 22 einen Zeitraum im Kalender hinterlegt hat, in dem er sich im Aktivitätsgebiet 14k aufhält und daher keine Bewässerung wünscht. Weiter sind im Garten 34 und im Aktivitätsgebiet 14k Funksensoren 62 angeordnet. Die Funksensoren 62 sind dazu vorgesehen, Umweltzustände im Garten 34 und im Aktivitätsgebiet 14k zu ermitteln, wie Bodenfeuchtigkeit und -temperatur, Licht-, Wind-, Luftfeuchtigkeits- und Temperaturverhältnisse, pH-Wert, Düngerkonzentration und gefallene Regenmenge. Die Funksensoren 62 übermitteln diese Umweltzustände an die Überwachungsvorrichtung 16, die anhand der übermittelten Umweltzustände den Aktivitätsgebietszustand des Aktivitätsgebiets 14k aktualisiert.

Figur 6 zeigt ein weiteres Anwendungsbeispiel des Systems 10 zur Überwachung und Steuerung von Aktivitäten von Gartengeräten 12, von denen in Figur 6 eines beispielhaft dargestellt ist. Ein Benutzer 22 hält sich in einem Aktivitätsgebiet 14l auf. Das Gartengerät 12 hält sich in einem Aktivitätsgebiet 14m auf, in dem zwei Funksensoren 62a, 62b angeordnet sind. Die Funk-Sensoren 62a, 62b sind dazu vorgesehen, Umweltzustände zu ermitteln wie Bodenfeuchtigkeit und -temperatur, Licht-, Wind-, Luftfeuchtigkeits- und Temperaturverhältnisse, pH-Wert, Düngerkonzentration und gefallene Regenmenge. Die Funksensoren 62a, 62b übermitteln die Umweltzustände in Form von Umweltinformationen 64a, 64b an die Überwachungsvorrichtung 16. Die Überwachungsvorrichtung 16 erhält vom externen Informationssystem 24 weitere Informationen, insbesondere den aktuellen Wetterbericht mit Informationen über die zu erwartenden Temperaturen, Sonnenscheindauer und Niederschläge. Das Überwachungssystem 16 aktualisiert mit diesen Informationen die Aktivitätsgebietszustände der Aktivitätsgebiete 14l, 14m. Der Benutzer 12 übermittelt an die Überwachungsvorrichtung 16 Benutzereingaben 54, insbesondere durch den Benutzer beobachtete Missstände in den Aktivitätsgebieten 14l, 14m, wie einen unzureichend geschnittenen Rasen, zu wenig oder zu stark bewässerte Gebiete, Pflanzen mit Mangelerscheinungen und Schädlingsbefall. Die Überwachungsvorrichtung 16 nutzt die Umweltzustände, Umweltinformationen 64a, 64b, Benutzereingaben 54 und Informationen des Informationssystems 24 zur Aktualisierung der Aktivitätsgebietszustände und zur Steuerung der Aktivitäten von Gartengeräten 12. Insbesondere optimiert die Überwachungsvorrichtung die Bewässerung der Aktivitätsgebiete 14l, 14m, eine Beimischung von Dünger und/oder Schädlingsbekämpfungsmitteln und/oder Mähen von Wiesen anhand dieser Informationen. Stellt der Benutzer 22 fest, dass ein Aktivitätsgebiet 14l, 14m zu stark bewässert ist, bricht das Überwachungssystem 16 eine geplante Bewässerung ab. Zusätzlich kann der Benutzer 22 mittels der Benutzereingabe 54 Gartengeräte 12 direkt steuern und Aktivitäten der Gartengeräte 12 direkt auslösen oder stoppen. Der Benutzer 22 kann so in die Steuerung der Gartengeräte 12 durch die Überwachungsvorrichtung 16 aktiv eingreifen und Aktivitäten der Gartengeräte 12 veranlassen und/oder stoppen. Zur Benutzereingabe 54 kann der Benutzer 22 vorteilhaft ein Mobiltelefon oder eine Armbanduhr mit einer Datenverbindung nutzen.

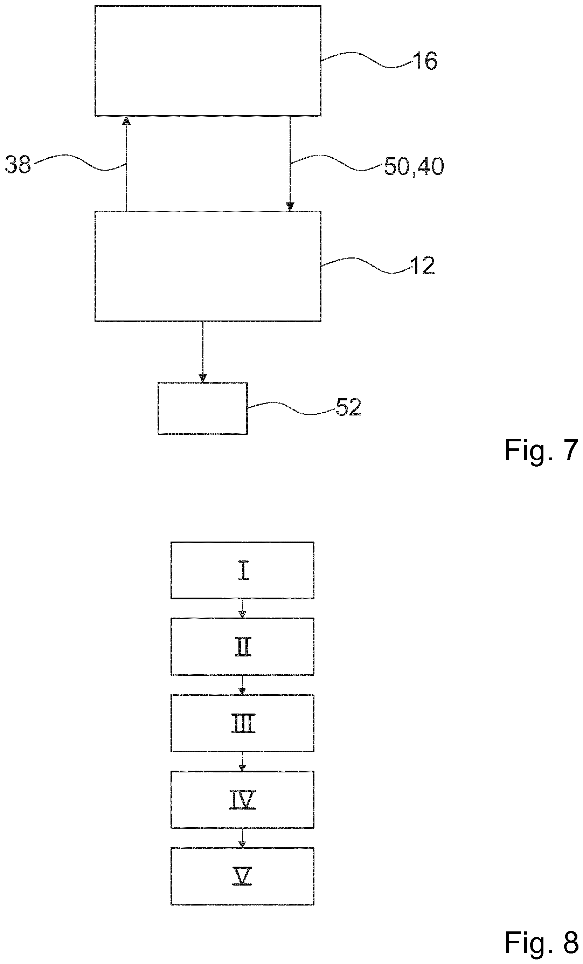

Figur 7 zeigt einen Informationsfluss zwischen der Überwachungsvorrichtung 16 und dem Gartengerät 12. Das Gartengerät 12 sendet seine Zustandsinformationen 38 an die Überwachungsvorrichtung 16. Die Überwachungsvorrichtung 16 sendet an das Gartengerät 12 eine Aktivitätsgebietskarteninformation 50, die eine Karte eines Aktivitätsgebiets enthält, in dem sich das Gartengerät 12 aufhält. Das Gartengerät 12 kann somit selbstständig Aktivitäten in dem Aktivitätsgebiet durchführen. Weiter sendet die Überwachungsvorrichtung 16 ein Steuersignal 40, um dem Gartengerät 12 eine Anweisung zu geben mit einer Aktivität 52 zu beginnen.

Figur 8 zeigt ein Verfahren zur Ermittlung von Aktivitätsgebietskarteninformationen 50 eines Aktivitätsgebiets. In einem Schritt I wird ein Ort des Gartens 34 ermittelt, zum Beispiel durch eine Benutzereingabe oder eine GPS-Ortung. In einem Schritt II wird eine Gebietskarte des Gartens 34 über eine Schnittstelle 20 von einem als Kartenserver ausgebildeten Informationssystem 24 geladen. In einem Schritt III werden die Aktivitätsgebiete auf der Gebietskarte des Gartens 34 verzeichnet. In einem Schritt IV werden die Aktivitätsgebiete durch eine genauere Beschreibung verbessert, insbesondere die Art des Aktivitätsgebiets, welche Aktivitäten von welchen Gartengeräten 12 in diesem Aktivitätsgebiet durchgeführt werden sollen, sowie spezielle für das Aktivitätsgebiet geltende Regeln und Vorsichtsmaßnahmen. Schritt IV kann durch die Überwachungsvorrichtung 16 selbstständig ausgeführt werden, indem zum Beispiel Luftaufnahmen ausgewertet werden, auf denen unterschiedliche Vegetationsformen sichtbar sind. Schritt IV kann zusätzlich vom Benutzer 22 unterstützt werden, der weitere Eingaben vornimmt, insbesondere während er mit einem Smartphone oder Tablet-Computer oder einem anderen geeigneten portablen Gerät im Garten 34 weitere Informationen aufnimmt. In einem Schritt V wird die Aktivitätsgebietskarteninformation 50 des Aktivitätsgebiets durch Verknüpfung der Daten erstellt. Die Aktivitätsgebietskarteninformationen 50 werden durch die Überwachungsvorrichtung 16 zusätzlich mit durch die Gartengeräte 12 erfassten Zustandsinformationen 38 ergänzt. Das als Mähroboter ausgebildete Gartengerät 12a weist zum Beispiel Abstandssensoren auf sowie Sensoren, um eine Rasenhöhe zu erfassen. Diese Daten werden mit den Zustandsinformationen 38 zusätzlich zu den Orts- und Bewegungsinformationen an die Überwachungsvorrichtung 16 übertragen. Die Überwachungsvorrichtung 16 kann mit diesen Daten die Grenzen der als Rasen ausgebildeten Aktivitätsgebiete 14a und 14c erfassen und/oder bei Veränderungen korrigieren. Änderungen im Garten 34 können so durch die Überwachungsvorrichtung erkannt und in den Aktivitätsgebietskarteninformationen 50 nachgeführt werden.

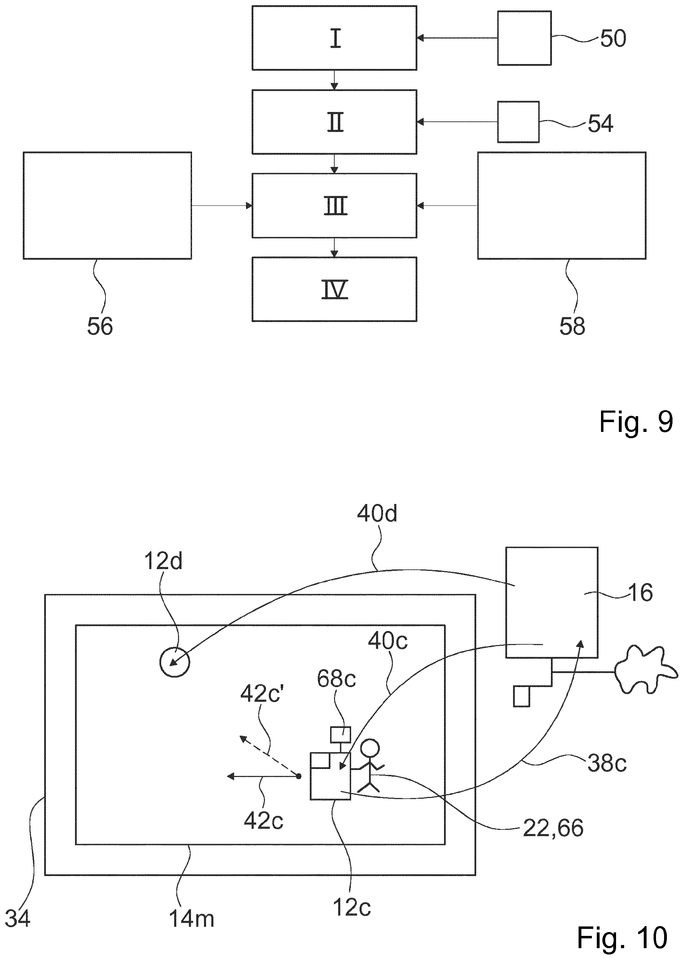

Figur 9 zeigt eine Darstellung eines Verfahrens zur Festlegung von Aktivitäten 52 durch die Überwachungsvorrichtung 16. In einem Schritt I wird eine Aktivitätsgebietskarteninformation 50 zumindest eines Aktivitätsgebiets 14 eingelesen. In einem Schritt II wird eine Benutzereingabe 54 eingelesen, zum Beispiel ein Kalenderintervall, für das Aktivitäten 52 generiert werden sollen. In einem Schritt III wird ein Aktivitätsgebietszustand des Aktivitätsgebiets 14 aktualisiert. Zu diesem Zweck wird eine Aktivitätsgebietsinformation 56 über einen im Aktivitätsgebiet 14 angebrachten Sensor oder über ein Gartengerät 12, das sich im Aktivitätsgebiet 14 befindet, eingelesen. Die Aktivitätsgebietsinformation 56 kann eine Düngerkonzentration, Bodendichte, Vegetationsart, Feuchtigkeit und weitere Faktoren umfassen. Weiter wird ein Umweltzustand 58 eingelesen. Der Umweltzustand 58 kann über externe Informationssysteme 24 oder Sensoren ermittelt werden und eine Wettervorhersage, eine Personendichte im Aktivitätsgebiet 14, Tiere und mobile sowie ruhende Gegenstände im Aktivitätsgebiet 14 umfassen. In einem Schritt IV werden nach einer Verknüpfung der Informationen vorteilhafte Aktivitäten 52 der Gartengeräte 12 ausgelöst. Es ist auch möglich, dass die Schritte I bis IV in einer anderen geeigneten, von diesem Beispiel abweichenden Reihenfolge ausgeführt werden.

Figur 10 zeigt ein weiteres Anwendungsbeispiel des Systems 10 zur Überwachung und Steuerung von Aktivitäten von Gartengeräten 12. Im Garten 34 ist ein Aktivitätsgebiet 14m angeordnet. Ein Gartengerät 12c ist als bedienergeführter Rasenmäher ausgebildet. Der Benutzer 22 ist in diesem Fall ein Bediener 66 des Gartengeräts 12c. Die Überwachungsvorrichtung 16 sendet an das Gartengerät 12c ein Steuersignal 40c, das eine Einstellung für eine Schnitthöhe und eine vorgeschlagene Bewegungsrichtung 42c zum Mähen des Aktivitätsgebiets 14m enthält. Das Gartengerät 12c stellt die Schnitthöhe selbsttätig ein und zeigt mit Hilfe einer Anzeigeeinheit 68c dem Bediener 66 die vorgeschlagene Bewegungsrichtung 42c an. Der Bediener 66 führt das Gartengerät 12c, wobei er von der vorgeschlagenen Bewegungsrichtung 42c abweichen kann. Das Gartengerät 12c sendet an die Überwachungsvorrichtung 16 seine Zustandsinformationen 38c, die Orts- und Bewegungsinformationen umfassen. Die Überwachungsvorrichtung 16c erkennt so die vom Gartengerät 12c tatsächlich ausgeführten Bewegungen und passt die dem Bediener 66 vorgeschlagene Bewegungsrichtung 42c dynamisch an. Die vorgeschlagene Bewegungsrichtung 42c wird von der Überwachungsvorrichtung 16 so gewählt, dass das Aktivitätsgebiet 14m möglichst effizient gemäht wird. Weiter passt die Überwachungsvorrichtung 16 die Bewegungsrichtung 42 und/oder Bewegungsrichtungen weiterer, hier nicht dargestellter Gartengeräte im Aktivitätsgebiet 14m so an, dass unzulässige Annäherungen zwischen den weiteren Gartengeräten und dem Gartengerät 12c mit dem Bediener 66 vermieden werden. Weicht der Bediener 66 von der vorgeschlagenen Bewegungsrichtung 42c ab, passt die Überwachungsvorrichtung 16c die Bewegungsrichtungen 42 und/oder Aktivitäten der weiteren Gartengeräte so an, dass Konflikte vermieden werden. Im Aktivitätsgebiet 14m befindet sich weiter ein Gartengerät 12d, das als Rasensprenger ausgebildet ist. Die Überwachungsvorrichtung 16 sendet an das Gartengerät 12d Steuersignale 40d, um eine Bewässerung zu aktivieren oder zu deaktivieren. Die Bewässerungsaktivitäten des Gartengeräts 12d werden durch die Überwachungsvorrichtung 16 so angepasst, dass eine Bewässerung in Bereichen des Aktivitätsgebiets 14m, in dem sich das Gartengerät 12c mit dem Bediener 66 aufhält, vermieden wird.

### Bezugszeichen

- 10: System
- 12: Gartengerät
- 14: Aktivitätsgebiet
- 16: Überwachungsvorrichtung
- 18: Kommunikationsmittel
- 20: Schnittstelle
- 22: Benutzer
- 24: Informationssystem
- 26: Ortungsmittel
- 28: Position
- 30: Orientierung
- 32: Gebiet (zulässiges Gebiet)
- 34: Garten
- 36: WLAN- und/oder Mobilfunk-Router
- 38: Zustandsinformation
- 40: Steuersignal
- 42: Bewegungsrichtung
- 44: Bewegungsrichtung (Benutzer)
- 46: Überlappungsbereich
- 48: Feuchtigkeitsinformation
- 50: Aktivitätsgebietskarteninformation
- 52: Aktivität
- 54: Benutzereingabe
- 56: Aktivitätsgebietsinformation
- 58: Umweltzustand
- 60: Diebstahlgebiet
- 62: Funksensor
- 64: Umweltinformation
- 66: Bediener
- 68: Anzeigeeinheit

## Patentansprüche

1. Überwachungsvorrichtung zur Uberwachung und Steuerung von Aktivitäten zumindest eines Gartengeräts (12) das zum Einsatz in einem Garten vorgesehen ist innerhalb zumindest eines Aktivitätsgebiets (14),
wobei das zumindest eine Gartengerät (12) vom Typ Rasenmäher, insbesondere Mähroboter, Schneidegerät, insbesondere Heckenschnittroboter, Bewässerungsgerät, Düngegerät. Laubsaugroboter, Mulcher, Wasserreinigungsroboter und oder Pumpe ausgebildet ist,
und wobei die Überwachungsvorrichtung eine Steuerung umfasst, welche ausgebildet ist zumindest einen Aktivitätsgebietszustand des Aktivitätsgebiets (14) und zumindest einen Gartengerätzustand des Gartengeräts (12) zur Steuerung des Gartengeräts (12) auszuwerten,
**dadurch gekennzeichnet, dass** die Überwachungsvorrichtung (16) unter Hinzunahme der Steuerung ausgebildet ist gleichzeitig die Aktivitäten von Gartengeräten (12) unterschiedlichen Typs zu überwachen und steuern.

2. Vorrichtung nach Anspruch 1, **dadurch gekennzeichnet, dass** die Steuerung der Überwachungsvorrichtung (16) einen Gartengerätzustand zumindest eines Gartengeräts (12) und/oder einen Aktivitätsgebietszustand zumindest eines weiteren Aktivitätsgebiets (14) auswertet.

3. Vorrichtung nach Anspruch 1 oder 2, **dadurch gekennzeichnet, dass** die Überwachungsvorrichtung (16) unter Hinzunahme der Steuerung Gartengeräte (12) in einander überlappenden Aktivitätsgebieten (14) überwacht und steuert.

4. Vorrichtung nach einem der vorhergehenden Ansprüche, **dadurch gekennzeichnet, dass** die Überwachungsvorrichtung (16) eine Verknüpfungseinheit umfasst, welche eine Aktivitätsgebietskarteninformation (50) der Aktivitätsgebiete (14) durch eine Verknüpfung einer Gebietskarteninformation mit Benutzerinformationen und/oder Aktivitätsgebietszuständen und/oder Gartengerätzuständen erstellt.

5. Vorrichtung nach einem der vorhergehenden Ansprüche, **dadurch gekennzeichnet, dass** die Überwachungsvorrichtung (16)) eine Verknüpfungseinheit umfasst, welche zumindest eine Benutzerinformation mit zumindest einem Aktivitätsgebietszustand und/oder zumindest einem Umweltzustand verknüpft.

6. Vorrichtung nach einem der vorhergehenden Ansprüche, **dadurch gekennzeichnet, dass** die Überwachungsvorrichtung (16) über ein drahtloses Kommunikationsmittel (18) zur Kommunikation mit zumindest einem Gartengerät (12) verfügt.

7. Vorrichtung nach einem der vorhergehenden Ansprüche, **dadurch gekennzeichnet, dass** die Überwachungsvorrichtung (16) über eine internetbasierte Schnittstelle (20) zur Kommunikation mit zumindest einem Gartengerät (12) und/oder zumindest einem Benutzer (22) und/oder zumindest einem externen Informationssystem (24) verfügt.

8. Vorrichtung nach einem der vorhergehenden Ansprüche, **dadurch gekennzeichnet, dass** die Überwachungsvorrichtung (16) über zumindest ein Ortungsmittel (26) zur Erfassung einer Position (28) und/oder Orientierung (30) zumindest eines der Gartengeräte (12) verfügt.

9. Vorrichtung nach Anspruch 8, **dadurch gekennzeichnet, dass** die Überwachungsvorrichtung (16) eine Ortungseinheit umfasst, welche bei einer Ortung zumindest eines Gartengeräts (12) außerhalb eines zulässigen Gebiets (32) und/oder innerhalb eines Diebstahlgebiets (60) das Gartengerät (12) deaktiviert und/oder eine Meldung ausgibt.

10. Vorrichtung nach Anspruch 9, **dadurch gekennzeichnet, dass** die Überwachungsvorrichtung (16) eine Verfolgungseinheit umfasst, welche eine Position (28) des Gartengeräts (12) außerhalb des zulässigen Gebiets (32) und/oder innerhalb des Diebstahlgebiets (60) verfolgt.

## Claims

1. Monitoring device for monitoring and controlling activities of at least one gardening tool (12) adapted for use in a garden within at least one activity zone (14),
wherein the at least one gardening tool (12) is of the type lawn mower, in particular configured as a mowing robot, cutting tool, in particular hedge trimming robot, irrigation tool, fertilizer tool. leaf suction robot, mulcher, water cleaning robot and/or pump,
and wherein the monitoring device comprises a controller which is adapted to evaluate at least one activity zone state of the activity zone (14) and at least one gardening tool state of the gardening tool (12) for controlling the gardening tool (12),
**characterized in that** the monitoring device (16) with addition of the control is adapted to simultaneously monitor and control the activities of different types of gardening tools (12).

2. Device according to claim 1, **characterized in that** the control of the monitoring device (16) evaluates a gardening tool state of at least one gardening tool (12) and/or an activity zone state of at least one further activity zone (14).

3. Device according to claim 1 or 2, **characterized in that** the monitoring device (16) with addition of the control monitors and controls gardening tools (12) in mutually overlapping activity zones (14).

4. Device according to any one of the preceding claims, **characterized in that** the monitoring device (16) comprises a linking unit which generates an activity zone map information (50) of the activity zones (14) by linking a zone map information with user information and/or activity zone states and/or gardening tool states.

5. Device according to any one of the preceding claims, **characterized in that** the monitoring device (16) comprises a linking unit which links at least one user information with at least one activity zone state and/or at least one environmental state.

6. Device according to any one of the preceding claims, **characterized in that** the monitoring device (16) has a wireless communication means (18) for communication with at least one gardening tool (12).

7. Device according to any one of the preceding claims, **characterized in that** the monitoring device (16) has an Internet-based interface (20) for communication with at least one gardening tool (12) and/or at least one user (22) and/or at least one external information system (24).

8. Device according to any one of the preceding claims, **characterized in that** the monitoring device (16) has at least one locating means (26) for detecting a position (28) and/or orientation (30) of at least one of the gardening tools (12).

9. Device according to claim 8, **characterized in that** the monitoring device (16) comprises a locating unit which deactivates the gardening tool (12) and/or issues a message when at least one gardening tool (12) is located outside a permitted area (32) and/or within a theft area (60).

10. Device according to claim 9, **characterized in that** the monitoring device (16) comprises a tracking unit which tracks a position (28) of the gardening implement (12) outside the permitted area (32) and/or within the the theft area (60).

## Revendications

1. Dispositif de surveillance pour la surveillance et la commande des activités d'au moins un appareil de jardinage (12) prévu pour être utilisé dans un jardin à l'intérieur d'au moins une zone d'activité (14),
**caractérisé en ce qu'**au moins un appareil de jardinage (12) se présente sous la forme d'une tondeuse à gazon, en particulier d'un robot tondeuse, d'un appareil de coupe, en particulier d'un robot taille-haies, d'un appareil d'arrosage, d'un appareil de fertilisation, d'un robot aspirateur de feuilles, d'un broyeur, d'un robot nettoyeur d'eau et/ou d'une pompe,
et **caractérisé en ce que** le dispositif de surveillance comporte une commande qui est conçue pour évaluer au moins un état de la zone d'activité (14) et au moins un état de l'appareil de jardinage (12) pour la commande de l'appareil de jardinage (12),
**caractérisé en ce que** le dispositif de surveillance (16) est conçu avec l'ajout d'une commande pour surveiller et commander simultanément les activités d'appareils de jardinage (12) de différents types.

2. Dispositif selon la revendication 1, **caractérisé en ce que** la commande du dispositif de surveillance (16) évalue l'état d'au moins un appareil de jardinage (12) et/ou l'état d'au moins une autre zone d'activité (14).

3. Dispositif selon la revendication 1 ou 2, **caractérisé en ce que** le dispositif de surveillance (16) auquel a été adjoint la commande surveille et commande des appareils de jardinage (12) dans des zones d'activité (14) qui se chevauchent.

4. Dispositif selon l'une des revendications précédentes, **caractérisé en ce que** le dispositif de surveillance (16) comprend une unité logique qui génère des informations cartographiques (50) des zones d'activité (14) grâce à l'établissement d'un lien logique entre les informations cartographiques d'une zone et les informations de l'utilisateur et/ou l'état de zones d'activité et/ou l'état d'appareils de jardinage.

5. Dispositif selon l'une des revendications précédentes, **caractérisé en ce que** le dispositif de surveillance (16) comprend une unité logique qui relie au moins une information d'utilisateur avec l'état d'au moins une zone d'activité et/ou au moins un état de l'environnement.

6. Dispositif selon l'une des revendications précédentes, **caractérisé en ce que** le dispositif de surveillance (16) dispose d'un moyen de communication sans fil (18) pour la communication avec au moins un appareil de jardinage (12).

7. Dispositif selon l'une des revendications précédentes, **caractérisé en ce que** le dispositif de surveillance (16) dispose d'une interface Internet (20) à des fins de communication avec au moins un appareil de jardinage (12) et/ou au moins un utilisateur (22) et/ou au moins un système d'information externe (24).

8. Dispositif selon l'une des revendications précédentes, **caractérisé en ce que** le dispositif de surveillance (16) dispose d'au moins un moyen de localisation (26) pour la détection d'une position (28) et/ou l'orientation (30) d'au moins l'un des appareils de jardinage (12).

9. Dispositif selon la revendication 8, **caractérisé en ce que** le dispositif de surveillance (16) comprend une unité de localisation qui désactive l'appareil de jardinage (12) et/ou émet un message en cas de localisation d'au moins un appareil de jardinage (12) à l'extérieur d'une zone autorisée (32) et/ou à l'intérieur d'une zone exposée au vol (60).

10. Dispositif selon la revendication 9, **caractérisé en ce que** le dispositif de surveillance (16) comprend une unité de suivi qui suit une position (28) de l'appareil de jardinage (12) à l'extérieur de la zone autorisée (32) et/ou à l'intérieur de la zone exposée au vol (60).
